# EUROPÄISCHE PATENTANMELDUNG

(11) **EP 1 234 648 A1**
(43) Veröffentlichungstag der Anmeldung: **28.08.2002**
(21) Anmeldenummer: 02003738.8
(22) Anmeldetag: 19.02.2002
(51) Int. Cl.: B29C 35/08

(54) **Verfahren und Vorrichtung zur Voraktivierung kationisch polymerisierender Massen**

(30) Priorität: 21.02.2001 DE 10108381
(71) Anmelder: DELO Industrieklebstoffe GmbH & Co. KG, 86899 Landsberg (DE)
(72) Erfinder: Herold, Wolf-Dietrich, Dr., 82229 Seefeld (DE); Dengler, Dietmar, Dr., 86899 Landsberg (DE); Möst, Rainer, 82110 Germering (DE)
(74) Vertreter: Strehl Schübel-Hopf & Partner

(57) **Zusammenfassung**

Zur Voraktivierung kationisch polymerisierender Massen wird eine Bestrahlungsquelle **10** mit einer aus LEDs **12** aufgebauten Abstrahlfläche **11** verwendet, die in geringem Abstand von der zu bestrahlenden Masse **15** angeordnet wird, und die Bestrahlung wird so durchgeführt, daß die Erwärmung der Masse **15** unter 50 °C bleibt und eine für die Verarbeitung ausreichende Offenzeit der Masse erzielt wird.

## Beschreibung

Einkomponentige, strahlungshärtende Massen haben zum Verkleben und Vergießen in großem Maße Eingang in die industrielle Fertigung gefunden. Dabei erfolgt die Aushärtung bei sehr dünnen Schichten durch Elektronenstrahlen (EB) und bei dickeren Schichten durch ultraviolette Strahlen (UV) oder durch sichtbare Strahlung (VL).

Bei den strahlungsaktivierbaren Massen unterscheidet man zwei grundlegend verschiedene chemische Basismaterialien und die damit verbundenen Reaktionsmechanismen. Die eine Gruppe stellen die radikalisch härtenden Acrylate dar (strahlungsaktivierte Polymerisation). Charakteristisch für die Ausgangsmonomere, die mittels radikalischer Polymerisation vernetzen können, ist das Vorhandensein von mindestens einer Kohlenstoff-Kohlenstoff-Doppelbindung im Molekül. Bei der photoinduzierten radikalischen Härtung führt das Ausschalten der Lichtquelle auch bei noch vorhandenen Monomeren und Photoinitiatoren zum sofortigen Polymerisationsende. Dies liegt daran, daß die vorhandenen Radikale kombinieren und keine Primär-Radikale nachgebildet werden.

Die andere Gruppe der strahlungsaktivierbaren Massen bilden die kationisch härtenden Epoxyde (strahlungsinitiierte Polymerisation). Hier erfolgt der Härtungsmechanismus nach dem Prinzip der kationischen Polymerisation. Als Ausgangsmonomere eignen sich insbesondere cycloaliphatische Verbindungen, wie z.B. cycloaliphatische Epoxyde, die unter Ringöffnung leicht polymerisieren. Bei der photoinitiierten oder photoinduzierten kationischen Härtung wird der Härtungsmechanismus durch eine Strahlungsdosis initiiert und verläuft auch nach Abschalten der Strahlung weiter bis zur Endaushärtung. Besonders interessant beim Applizieren von photoinitiierbaren Massen ist die Möglichkeit der "Voraktivierung". Hier wird die Masse, z.B. ein Klebstoff, nach dem Auftragen auf ein Fügeteil kurzzeitig bestrahlt und dadurch aktiviert. Anschließend wird das zweite Bauteil gefügt. Der große Vorteil liegt darin, daß man auch all die Materialien verkleben kann, die für UV- bzw. VL-Strahlung nicht durchlässig sind.

Zwischen der Bestrahlung und dem Fügen der Teile liegt die sogenannte "Offenzeit". Während dieser Offenzeit verändert die Masse ihre Eigenschaften im Hinblick auf Viskosität, Adhäsion und Hautbildung an der Oberfläche nur unwesentlich. Erst nach der Offenzeit setzt der Aushärtvorgang ein und läuft selbsttätig weiter bis zur Endaushärtung.

Die Offenzeit selbst ist direkt abhängig von der eingestrahlten Energiedosis, wodurch man den Aushärtprozeß gezielt beschleunigen oder verlangsamen kann. Hieran wird deutlich, daß eine absolut gleichmäßige Bestrahlung einer Fläche für die Voraktivierung von größter Bedeutung ist.

Ein zweiter wichtiger Parameter für die Offenzeit stellt die Temperatur der vorzubelichtenden Masse dar. Mit steigender Temperatur verkürzt sich die Offenzeit erheblich. Ideal wäre keine oder aber eine einstellbare, über die zu bestrahlende Gesamtfläche gleichmäßige Temperaturführung. Bisher bekannte Bestrahlungssysteme erzeugen jedoch eine große Dosis an unkontrollierter und ungleichmäßiger Wärmestrahlung, die man anschließend durch Filter oder dikroitische Reflektoren zu eliminieren versucht.

Da die Offenzeit in direkter Abhängigkeit zu der jeweils eingebrachten Strahlungsenergie steht, verändert sich die Offenzeit auch direkt mit dem Abfall der Strahlungsintensität der Leuchten. Üblicherweise eingesetzte Brenner zeigen einen Strahlungsabfall über der Lebensdauer von 50 bis 60 %. Dies führt beim Fertigungsprozeß zu einer hohen Prozeßunsicherheit. Zudem ist es für eine Überwachung nachteilig, daß die elektrische Leistungsaufnahme der Brenner nicht mit der abgegebenen Strahlungsleistung korreliert.

Aus EP 0 388 775 A1 sind ein Verfahren gemäß dem ersten Teil des Anspruchs 1 und eine Vorrichtung gemäß dem ersten Teil des Anspruchs 8 bekannt. Dort wird der zu verarbeitende Kleb- oder Vergußstoff in einem transparenten Vorratsbehälter über eine Zeitspanne von 0,5 bis 300 s bestrahlt und über eine Rohr- oder Schlauchleitung einer entfernt angeordneten Applizierstelle zugeführt. Die Bestrahlung erfolgt mittels einer handelsüblichen Lampe, so daß sich die oben geschilderten Nachteile ergeben.

Der Erfindung liegt die Aufgabe zugrunde, die Offenzeit kationisch polymerisierbarer Massen über lange Zeiträume (bis zu 10.000 Stunden) möglichst stabil zu halten.

Diese Aufgabe wird mit dem in Anspruch 1 angegebenen Verfahren bzw. der in Anspruch 8 angegebenen Vorrichtung gelöst.

Als Strahlungsquelle werden vorzugsweise flächig angeordnete Leuchtdioden (LEDs) eingesetzt, die die gesamte vorzuaktivierende Fläche gleichmäßig ausleuchten. Da jede einzelne LED nur eine geringe Strahlungsleistung besitzt, sind bei einer großen Fläche eine Vielzahl von Dioden dicht neben einander angeordnet. Die LED-Fläche ist zweckmäßig nur wenige Millimeter von der vorzuaktivierenden Fläche entfernt.

In ihrem Strahlungsverhalten besitzt die LED eine Vielzahl von Vorteilen. So sendet eine LED nur ein sehr schmales elektromagnetisches Band von wenigen Nanometern aus. Dadurch lassen sich das Absorptionsband des Photoinitiators und das Emissionsband der Strahlungsquelle sehr gut aufeinander abstimmen. Im Hinblick auf die bekannten Photoinitiatoren für kationische Systeme sollte das schmale elektromagnetische Strahlungsband der Dioden (30 bis 50 nm) zwischen 300 und 550 nm Wellenlänge liegen.

Herkömmliche Strahlungsquellen (z.B. dotierte Hg-Brenner) führen besonders bei Klebstoffschichten mit einer Dicke > 2 mm zu einer inhomogenen Aktivierung, wahrscheinlich begründet durch das breite Wellenlängenspektrum dieser Strahlungsquellen. Bei LEDs ermöglicht die genaue Abstimmbarkeit der Spektren von Photoinitiator und Strahlungsquelle eine besonders homogene Voraktivierung von Klebstoffschicht-Dicken bis zu 4 mm.

Die Schmalbandigkeit der Strahlung einer LED hat den weiteren Vorteil, daß keine unerwünschte Strahlung auf die vorzuaktivierenden Massen auftrifft und es zu keiner unkontrollierten und unerwünschten Aufheizung der Massen kommt.

LEDs haben über ihre gesamte Lebensdauer eine gleichbleibende Strahlungsemission. Einen Abfall der Strahlungsleistung über der Zeit, wie er bei anderen Strahlungsquellen im UV- bzw. VL-Bereich bekannt ist, gibt es bei LEDs nicht. Weiterhin liegt die Lebensdauer einer LED bei vorschriftsmäßiger Ansteuerung bei ca. 10.000 Stunden und damit um den Faktor 10 höher als bei üblichen UV- und VL-Strahlungsquellen. Zum Ende der Lebensdauer fällt die Lichtleistung abrupt von 100 % auf 0 % ab, gleichzeitig sinkt auch die elektrische Leistung auf Null. Damit wird ein Funktionsausfall detektierbar.

Ein weiteres Merkmal einer LED besteht darin, daß die Wellenlänge des Emissionsspektrums über der Zeit keine Verschiebung erfährt. Auch hierin unterscheidet sie sich von herkömmlichen Lichtquellen und ist für den Einsatz bei der Voraktivierung besonders günstig.

Eine weitere Eigenschaft von LEDs, durch die sie sich ebenfalls wesentlich von üblichen UV- und VL-Strahlungsquellen unterscheiden, besteht darin, daß sie beim Einschalten innerhalb von Millisekunden auf volle Strahlungsleistung schaltet und beim Abschalten ähnlich abrupt erlöschen. Herkömmliche Brenner benötigen eine Einbrennzeit von mehreren Minuten. Durch die präzise Steuerbarkeit von LEDs lassen sich auch geringe Schwankungen in der Strahlungsmenge vermeiden, die sonst zu Fehlern im Fertigungsprozeß führen und Ausschuß verursachen.

Für die Vorbelichtung einer kationisch polymerisierbaren Masse bedeuten die oben angeführten Punkte, bezogen auf einen Fertigungsprozeß, daß auch große Flächen von Kleb- oder Dichtstoffen sehr exakt vorbelichtet werden können, da sowohl die Wellenlänge der eingebrachten Energie als auch die Energiedosis und damit die Temperatur über den gesamten Zeitraum des Fertigungsprozesses konstant bleiben.

Bei einer Voraktivierung mit heute üblichen Strahlungsquellen (Hg-Brenner) verkürzt sich die verfügbare Offenzeiten der Masse dadurch erheblich, daß diese Strahlungsquellen neben dem gewünschten Strahlungsspektrum sowohl längerwellige IR-Strahlung als auch kürzerwellige UV-Strahlung emittieren. Dabei beschleunigt die IR-Strahlung den Aushärtvorgang unkontrollierbar, d. h. die Offenzeit verkürzt sich, und bei einer zu hohen Temperatur (> 50 °C) gasen die zu polymerisierenden Massen aus. Die ungewünschte UV-Strahlung wiederum führt zu einer schnellen Hautbildung auf der Oberfläche der Massen, wodurch ein anschließender Fügevorgang ausgeschlossen wird. Beide Effekte beeinflussen die Vorbelichtung negativ, da sich für den nachgeschalteten automatisierten Fertigungsvorgang eine hohe Prozeßunsicherheit ergibt.

Da die oben angeführte, ungewünschte Strahlung durch den Einsatz einer LED-Strahlungsquelle ausgeschlossen werden kann, erreicht man bei gleicher Offenzeit eine schnellere Aushärtung. Dies beschleunigt den Fertigungsprozeß, da eine schnellere Handfestigkeit erreicht wird. Gleichzeitig erhöht sich auch die Sicherheit, und auch Festigkeitsprüfungen können schneller erfolgen (weniger Ausschuß).

Durch Veränderung der eingebrachten elektrischen Energie läßt sich der Strahlungs-Output einer LED variieren. Als Folge verändert sich die Offenzeit der Masse. Erhöht man die Strahlungsmenge, so verkürzt sich die Offenzeit (z.B. auf 1 s) und damit der gesamte Aushärtungsprozeß. Senkt man den Strahlungs-Output, so verlängern sich die Offenzeit (z.B. auf 120 s), und der Aushärtungsvorgang.

Entscheidend für die Einbringung einer in Qualität und Quantität exakt definierten Menge an Strahlungsdosis in die Masse ist das Zünden und Ausschalten einer LED im Millisekundenbereich. Dadurch läßt sich ohne großen operativen Aufwand die für die Offenzeit entscheidende Strahlungsdosis bestimmen. Gerade diese Eigenschaft ist für eine exakte Vorbelichtung von großen Flächen von entscheidender Bedeutung, da das herkömmliche Wegschwenken einer Strahlungsquelle oder das Einschalten eines Shutters zwangsläufig über der Gesamtfläche zu unterschiedlichen Energiedosen führt. Weiterhin lassen sich durch schnelles und bequemes Einund Ausschalten im Millisekundenbereich auch Bestrahlungsprofile für die Voraktivierung realisieren. So kann die Einbringung einer Strahlungsdosis im wiederkehrenden Rhythmus von z.B. 4 s Bestrahlung und 3 s Pause erfolgen.

Sofern es am Ende der Lebensdauer einer LED zu einem Funktionsausfall kommt, ist dieser schlagartig und optisch sowie elektrisch sofort erkennbar. Somit läßt sich ein Fertigungsautomat leicht mit einem Störsignalgeber ausrüsten, der ebenfalls den Automaten abschaltet, um Ausschuß zu verhindern.

Da eine LED eine Abstrahlfläche von etwa 1 mm × 1 mm besitzt, können bei einer großflächigen Ausleuchtung beliebige Geometrien aufgebaut werden. Damit läßt sich die Strahlungsquelle bei optimaler homogener Ausleuchtung gezielt an die jeweilige Kleb- oder Dichtungsfläche anpassen.

Während bisher die Strahlungsdosierung für die Massen über den ständig nachzuregelnden Abstand der Strahlungsquelle zur vorzuaktivierenden Masse erfolgte, wird der Abstand bei einer LED-Fläche einmal fixiert und am Anfang nur einmal die Strahlungsleistung für die gesamte Lebensdauer geregelt.

Da eine LED ein fast monochromatisches Licht bei gutem elektrischem Wirkungsgrad aussendet, ist der Energieverbrauch insbesondere bei großen Flächen deutlich niedriger als bei herkömmlichen Strahlungsquellen. Für eine schnelle Aushärtung der polymerisierbaren Massen läßt sich durch eine gezielte Temperaturerhöhung der Massen (< 50 °C) der Aushärtvorgang beschleunigen. Dazu werden auf der LED-Fläche neben den UV- oder VL-LEDs gezielt IR-LEDs montiert. Diese sorgen dann für eine exakte Erwärmung der Massen, wodurch die Offenzeit in einem weiten Zeitfenster regelbar wird.

Es ist bekannt, daß die Lichtleistung mit dem Quadrat zur Entfernung von der Lichtquelle abnimmt. Bei einer dreidimensionalen vorzuaktivierenden Oberfläche scheitern herkömmliche Strahlungssysteme. Beim Einsatz von LEDs kann man die Strahlungsoberfläche in einfacher Weise an die dreidimensionale Substratfläche so anpassen, daß der Abstand der LEDs zu der jeweils vorzuaktivierenden Oberfläche exakt nur wenige Millimeter beträgt und die für die Voraktivierung präzise Strahlungsdosis über die gesamte Raumfläche sichergestellt wird.

Aus DE 297 14 686 U1 ist zwar der Einsatz einer aus LEDs bestehenden Lichtquelle bekannt. Die Druckschrift bezieht sich aber nicht auf die Voraktivierung kationisch polymerisierender Massen sondern auf die Strahlungspolymerisation von Dentalwerkstoffen mit dem Ziel ihrer Endaushärtung. Dort kommt es in erster Linie Schnelligkeit, Wirtschaftlichkeit und begrenzte Wärmeentwicklung, also auf die Bereitstellung einer großen Lichtmenge bei möglichst geringer Temperaturbelastung an. Zur Erzielung einer ausreichenden Lichtstärke ist unter anderem vorgesehen, mehrere LEDs zu einem Bündel zusammenzufassen.

Ausführungsbeispiele der erfindungsgemäßen Vorrichtung werden im folgenden anhand der Zeichnung kurz erläutert, deren
Fig. 1 eine aus LEDs aufgebaute Bestrahlungsquelle,
Fig. 2 eine Seitenansicht der Bestrahlungsquelle im Betrieb, und
Fig. 3 eine Variante der Bestrahlungsquelle zeigt.

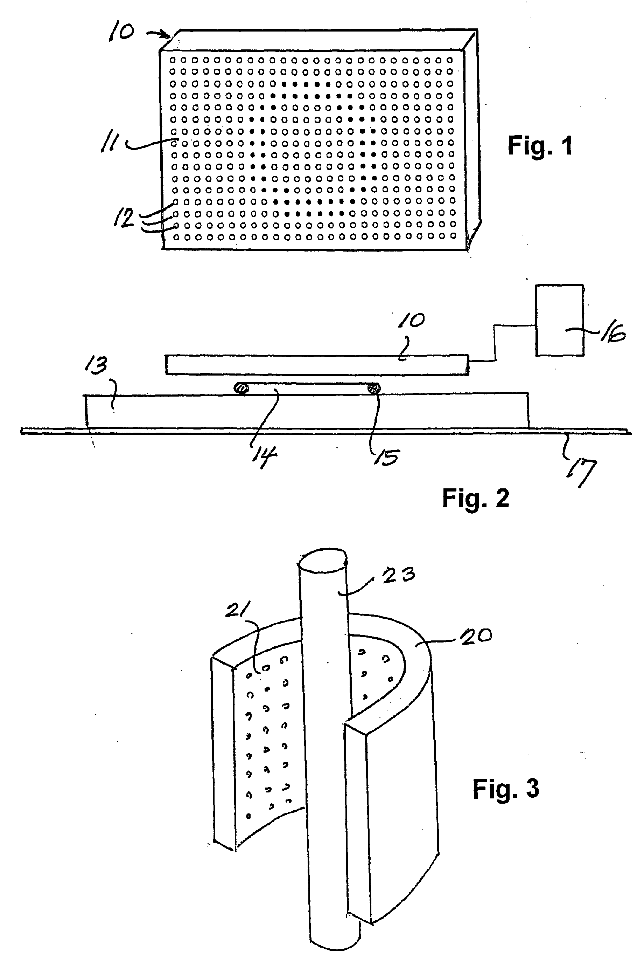

Die in Fig. 1 dargestellte Bestrahlungsquelle **10** weist an ihrer ebenen Abstrahlfläche **11** eine rechteckige Matrixanordnung von 100 oder mehr LEDs **12** auf, die mit einer Bandbreite von bis zu 50 nm innerhalb eines Wellenlängenbereichs von 300 bis 550 nm emittieren.

Gemäß Fig. 2 soll eine auf ein Substrat **13** in Form eines Ringes **14** aufgetragene Klebstoffmasse **15** voraktiviert werden. Dazu wird die Bestrahlungsquelle **10** in geringem Abstand von bis zu 30 mm über dem Substrat **13** angeordnet und von der Steuerung **16** für eine Zeitpanne von beispielsweise 2 s eingeschaltet.

Die Steuerung **16** sorgt dafür, daß aus der Gesamtanordnung der LEDs **12** nur diejenigen eingeschaltet werden, die der Form des Klebstoffrings **14** entsprechen. In Fig. 1 sind diese LEDs durch ausgefüllte Kreise angedeutet.

Danach wird das Substrat **13** mit der so voraktivierten Klebstoffmasse **15** mittels des Förderbandes **17** weitertransportiert und das nächste mit einem Klebstoffring versehene Substrat der Fertigungsreihe unter die Bestrahlungsquelle **10** gebracht. Der dabei verwendete Takt beträgt beispielsweise 10 s, so daß die Bestrahlungsquelle **10** mit einem Tastverhältnis von 1:4 ein/ausgeschaltet wird.

Bei der in Fig. 3 gezeigten Variante ist die Abstrahlfläche **21** der Bestrahlungsquelle **20** halbzylindrisch gekrümmt und zur Voraktivierung von Klebstoff etwa an Wellen oder sonstigen zylindrischen Objekten **23** geeignet.

## Patentansprüche

1. Verfahren zur Voraktivierung kationisch polymerisierender Massen, **dadurch gekennzeichnet, daß** als Bestrahlungsquelle **(10, 20)** LEDs **(12)** verwendet werden.

2. Verfahren nach Anspruch 1, wobei das elektromagnetische Strahlungsemissionsband der LEDs **(12)** zwischen 300 und 550 nm Wellenlänge liegt.

3. Verfahren nach Anspruch 1 oder 2, wobei die Bandbreite der elektromagnetischen Strahlung der LEDs **(12)** bis zu 50 nm beträgt.

4. Verfahren nach einem der vorhergehenden Ansprüche, wobei die Strahlungsdosis so eingestellt wird, daß die Offenzeit der vorzuaktivierenden Masse **(15)** zwischen 1 und 120 s liegt.

5. Verfahren nach einem der vorhergehenden Ansprüche, wobei die vorzuaktivierende Masse in einer Schichtdicke über 2 mm vorliegt.

6. Verfahren nach einem der vorhergehenden Ansprüche, wobei auch LEDs **(12)** mit einer Strahlungsemission der Wellenlänge > 800 nm eingesetzt werden.

7. Verfahren nach einem der vorhergehenden Ansprüche, wobei die Bestrahlungsquelle **(10, 20)** nur während der Zeit der Voraktivierung eingeschaltet wird.

8. Verfahren nach einem der vorhergehenden Ansprüche, wobei die Bestrahlungsquelle **(10, 20)** in einem Abstand zwischen 1 und 30 mm von der vorzuaktivierenden Masse **(15)** angeordnet wird.

9. Vorrichtung zur Voraktivierung von kationisch polymerisierenden Massen, **gekennzeichnet durch** eine mit LEDs **(12)** arbeitende Bestrahlungsquelle **(10, 20).**

10. Vorrichtung nach Anspruch 9, wobei das elektromagnetische Strahlungsemmisionsband der LEDs **(12)** zwischen 300 und 550 nm Wellenlänge liegt.

11. Vorrichtung nach Anspruch 9 oder 10, wobei die Bandbreite der elektromagnetischen Strahlung der LEDs **(12)** bis zu 50 nm beträgt.

12. Vorrichtung nach einem der Ansprüche 9 bis 11, wobei die Betrahlungsquelle auch LEDs **(12)** mit einer Strahlungsemission der Wellenlänge > 800 nm enthält.

13. Vorrichtung nach einem der Ansprüche 9 bis 12, **gekennzeichnet durch** eine Steuerung **(16),** die die Bestrahlungsquelle **(10, 20)** nur während der Zeit der Voraktivierung einschaltet.

14. Vorrichtung nach einem der Ansprüche 9 bis 13, wobei der Abstand zwischen der Bestrahlungsquelle **(10, 20)** und der vorzuaktivierenden Masse **(15)** zwischen 1 und 30 mm liegt.

15. Vorrichtung nach einem der Ansprüche 9 bis 14, wobei mehrere LEDs **(12)** in einer Abstrahlfläche **(11, 21)** angeordnet sind.

16. Vorrichtung nach Anspruch 15, wobei die LEDs **(12)** in der Abstrahlfläche **(11, 21)** der Bestrahlungsquelle **(10, 20)** in einem der Konfiguration der vorzuaktivierenden Masse **(15)** entsprechenden Muster angeordnet sind.

17. Vorrichtung nach Anspruch 15 oder 16, **gekennzeichnet durch** eine Steuerung **(16),** die von den die Abstrahlfläche **(11)** der Bestrahlungsquelle **(10, 20)** bildenden LEDs **(12)** nur den der jeweiligen Gestalt der vorzuaktivierenden Masse **(15)** entsprechenden Teil einschaltet.

18. Vorrichtung nach einem der Ansprüche 15 bis 17, wobei die Bestrahlungsquelle **(10, 20)** mehr als 100 eine Abstrahlfläche **(11, 21)** bildende LEDs **(12)** aufweist.

19. Vorrichtung nach einem der Ansprüche 15 bis 18, wobei die LEDs **(12)** in einer dreidimensionalen Abstrahlfläche **(21)** angeordnet sind.

20. Vorrichtung nach einem der Ansprüche 9 bis 19, **gekennzeichnet durch** einen Signalgeber, der bei einem Funktionsausfall einer LED ein Störsignal erzeugt.
